# EUROPEAN PATENT APPLICATION

(11) **EP 2 487 560 A1**
(43) Date of publication of application: **15.08.2012**
(21) Application number: 11154388.0
(22) Date of filing: 14.02.2011
(51) Int. Cl.: G06F 3/023, G06F 3/048

(54) **Handheld electronic devices with alternative methods for text input**

(71) Applicant: Research In Motion Limited, Waterloo, ON N2L 3W8 (CA)
(72) Inventor: Fyke, Steven, Henry, Waterloo Ontario N2L 3L3 (CA); Griffin, Jason, Tyler, Waterloo Ontario N2L 3L3 (CA); Pasquero, Jerome, Waterloo Ontario N2L 3L3 (CA)
(74) Representative: MERH-IP Matias Erny Reichl Hoffmann

(57) **Abstract**

A handheld electronic device for generation of text in a language is provided. The handheld electronic device comprises a memory for storing a plurality of linguistic objects of the language, and a set of input members consisting of no more than two input members that, when actuated, initiate input of characters of the language. Every alphabet character in the language is assigned to one actuation of one of the input members. Further, the handheld electronic device includes a processor for detecting a set of actuations of at least one of the input members and for determining a set of linguistic objects that correspond to the actuations, wherein each determined linguistic object includes a set of alphabet characters assigned to the set of actuations.

## Description

### FIELD OF TECHNOLOGY

The present disclosure relates to handheld electronic devices, including but not limited to handheld electronic devices with touch-sensitive displays and, more specifically, to systems and methods for alternative ways to enter text.

### Background

Electronic devices, including handheld electronic devices, have gained widespread use and may provide a variety of functions including, for example, telephonic, electronic messaging, and other personal information manager (PIM) application functions. Handheld electronic devices include, for example, several types of mobile stations such as simple cellular telephones, smart telephones, wireless personal digital assistants (PDAs), and laptop computers with wireless 802.11 or Bluetooth capabilities.

Handheld electronic devices such as PDAs or smart telephones are generally intended for handheld use and ease of portability. Smaller devices are generally desirable for portability. A touch-sensitive display, also known as a touchscreen display, may also be useful on handheld electronic devices, which are small and have limited space for user input and output. Advantageously, the information displayed on the touch-sensitive displays may be modified depending on the functions and operations being performed. With continued demand for decreased size of handheld electronic devices, touch-sensitive displays continue to decrease in size.

### Brief Description of the Drawings

It is to be understood that following detailed description is exemplary and explanatory only and is not restrictive of the invention, as claimed. The accompanying drawings, which are incorporated in and constitute a part of this specification, illustrate several embodiments of the invention and together with the description, serve to explain the principles of the invention. In the drawings:

Figs. 1A-1D show different views of handheld electronic devices in accordance with various embodiments.

Fig. 2 illustrates an assignment method performed by a handheld electronic device in accordance with an embodiment.

Fig. 3 illustrates a candidate set creation and display method performed by a handheld electronic device in accordance with an embodiment.

Figs. 4A and 4B show two front views of a handheld electronic device in accordance with an embodiment.

Figs. 5A and 5B show two front views of a handheld electronic device in accordance with another embodiment.

Figs. 6A and 6B show front views of handheld electronic devices in accordance with various embodiments.

Fig. 7 shows a front view of a handheld electronic device in accordance with another embodiment.

Figs. 8A-8C illustrate a text creation method performed by a handheld electronic device in accordance with various embodiments.

Figs. 9A and 9B show front and rear views of a device in accordance with another embodiment.

Fig. 10 shows a front view of a handheld electronic device in accordance with another embodiment.

Fig. 11 shows a handheld electronic device in accordance with another embodiment.

Fig. 12 shows a block diagram of an example of a handheld electronic device according to some embodiments.

### Detailed Description

For simplicity and clarity of illustration, reference numerals may be repeated among the figures to indicate corresponding or analogous elements. Also, similarly named elements perform similar functions and are similarly designed, unless specified otherwise. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, also variably referred to here as "device", which is a handheld electronic device in the embodiments described herein. Examples of handheld electronic devices include mobile, or handheld, wireless communication devices such as pagers, cellular phones, cellular smart-phones, wireless organizers, personal digital assistants, wirelessly enabled notebook computers, a handheld electronic game device, digital photograph album, digital camera, and so forth.

Users use handheld electronic devices in an increasing variety of ways and run a variety of applications on those devices. For example, a user may use a handheld electronic to exchange emails, watch videos, read the text of a journal or a book, or draft a document. As a result, a handheld electronic device often requires both a display for displaying text and images, and a keypad for entering text and other characters.

Such handheld electronic devices are generally intended to be portable, and thus are of a relatively compact configuration. In these devices, keys and other input structures often perform multiple functions under certain circumstances and in some embodiments have multiple aspects or features assigned thereto. With advances in technology, handheld electronic devices are built to have progressively smaller form factors yet have progressively greater numbers of applications and features resident thereon.

As the form factor decreases, difficulties arise in allocating sufficient space for both the display and the keypad. As a matter of usability, the display cannot be too small, because an average user cannot easily read a long text or watch a video on a very small display. In fact, the average handheld electronic device has shrunk to a size that for its display to be usable, the display needs to occupy almost all of the front space of the device. This does not leave much space for the keypad.

To compensate for the reduced available space, the size of the keypad has also shrunk. A keypad, however, must be capable of entering text, e.g., all twenty-six letters of the Latin alphabet, as well as appropriate punctuation and other symbols. Therefore, the small keypad includes a large number of tightly packed keys. Some reduced keypads have reduced the number of the keys to around ten. But, even for the reduced keypads, the size of the keyboards are so small that dividing that size among around ten keys still creates tightly packed small keys.

Tightly packed small keys often lead to typographical errors and reduced typing speed. When using the handheld electronic device, the user often holds the device with one or two hands, such that one or two of the user's fingers touch the keypad. For example, an average user may hold the device with both hands, and type a text by pressing different keys with her two thumbs. Thus, to enter a text, the user needs to move her fingers over the keypad and press different keys with the same finger. Because the keys are small and tightly packed, and also because the finger has to move to push different keys, a user often misfingers a key, that is, mistakenly presses a key close to the correct key. Such misfingering causes typographical errors and requires extra time and effort to correct the errors. Moreover, to find the right key to press, the user often needs to look away from the display and at the keypad. This looking away also reduces the speed of typing.

Different kinds of keypads suffer from the above deficiencies. Some handheld electronic devices allocate more space to the display by replacing an actual keypad with a virtual keypad. A virtual keypad is a keypad which appears on a touch-sensitive screen and is used by touching the location of the virtual keys on screen. However, virtual keypads may still suffer from some of the problems described above. To begin, because the virtual keypad takes some space on the display, the virtual keypad reduces the space available for displaying other objects, e.g., the text. Thus, at least during typing, a virtual keypad takes away from the text some of the useful space of the display.

Moreover, as in actual keypads, in a virtual keypad the keys are small and tightly packed, thus causing misfingering. Further, as with real keys, a user needs to frequently look away from the displayed text and at the virtual keypad to find the right key.

In various embodiments, a handheld electronic device is provided in which sufficient space is allocated to both the display and to the text entry keys without increasing the size of the device. Further, in some embodiments, a handheld electronic device is provided in which the user enters the text without a need to move a finger over multiple keys. Therefore, the risk of misfingering during to the movement of the finger is eliminated. Moreover, in some embodiments, a handheld electronic device is provided in which the user can enter the text without looking away from the display. Thus, the speed of text entry is increased.

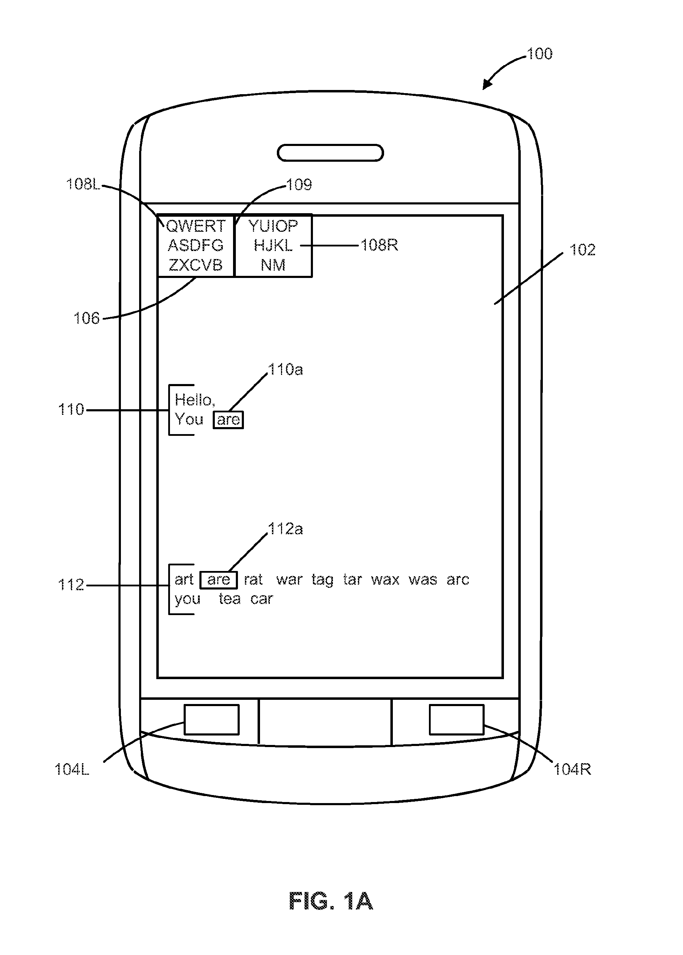

Fig. 1A shows a front view of a handheld electronic device 100 in accordance with an embodiment. Device 100 enables a user to enter text by actuating two input members. Device 100 includes a display 102 and a set of input members 104. In general, as used in this application, as set can include one or more members.

In the embodiment of Fig. 1A, device 100 includes two input members 104, a left input member 104L located in the lower left section and a right input member 104R located at the lower right section in the front of device 100. In some embodiments, display 102 is a touch-sensitive display. In various embodiments input members 104 are physical switches, accelerometers, capacitive, non-tactile keys, or capacitive keys with haptic response. A user actuates an input member by, for example, pressing or tapping on, the input member. Some embodiments of input members are also variably referred to as keys.

In various embodiments, the user enters a text which is displayed in entry section 110. To enter each word of the text, the user sequentially actuates input members 104 in a manner described in more detail below. Based on the sequence of actuations, device 100 displays, in candidate section 112, a set of candidate words which correspond to the actuations. When the user selects one of the candidate words as the correct entry, device 100 inserts the selection in entry section 110.

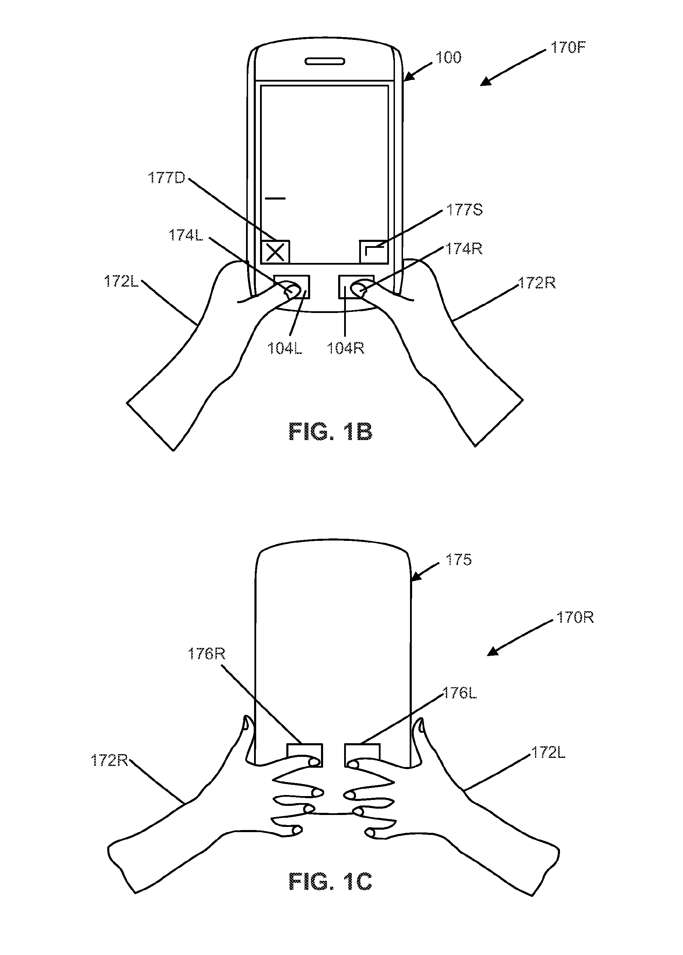

Fig. 1B shows a front view 170F of an exemplary use of device 100. When using device 100, a user can hold device 100 with her left hand 172L and her right hand 172R. Input members 104 are positioned such that, while the user is holding the device, the user's left thumb 174L is positioned over left input member 104L, and her right thumb 174R is positioned over right input member 104R. To enter a text, the user actuates one of input members 104 with the thumb that is positioned over that input member. Because the same finger is dedicated to actuating the same input member, the user need not move her fingers over different input members to enter the text. Thus, the user need not look away from display 102 to determine, for example, to which input member 104 move her finger. Instead, the user actuates, with the corresponding thumb, one of the two input members 104. Moreover, because the same finger is dedicated to actuating no more than one input member for entering text, the user cannot misfinger a key by mistakenly actuating a key that is next to the desired key.

In some embodiments, all or parts of display 102 is a touch-sensitive display. The touch-sensitive sections can be used for additional functions different from entering text, e.g., for selecting or scrolling text. In addition to actuating input members 104 with her thumbs to enter text, in some embodiments the user also uses her thumbs or other fingers to touch display 102 in order to perform the additional functions. In some embodiments, for example, to select a word the user performs a select touch by tapping on the word with a finger. Further, to scroll in a direction, the user performs a scroll touch by sweeping the screen in that direction with a finger. In some embodiments, a touch-sensitive section of display 102 also recognizes other touch contacts with one or more fingers to perform other functions, e.g., to delete a word, or to enter a space. In some other embodiments, specific touch-sensitive sections of display 102 are dedicated to performing those other functions. In some embodiments, for example, a delete section 177D of display 102 is touched to delete a highlighted text. In some embodiments, delete section 177D displays an appropriate sign that indicates the deletion function. Similarly, in some embodiments a space section 177S of display 102 is touched to add a space at the location of a cursor in the text, or after the last entered words.

In some embodiments, device 100 includes non-text input members for performing the additional functions, e.g., scrolling or selecting text. The user thus actuates the non-text input members to perform the additional functions. In some embodiments, the non-text input members are few in number, that is, one or two, or are so positioned in relation to input members 104 that the user need not look away from display 102 to determine which input member to actuate. Moreover, misfingering is avoided because the input members are positioned at distinct locations, away from each other and from non-input members.

Fig. 1C shows a rear view 170R of an exemplary device 175 with non-text input members, according to some embodiments. The front view of device 175 can be similar to that of device 100, shown in Fig. 1B. In the back, however, Fig. 1C shows that device 175 includes left and right non-text input members 176L and 176R. In some embodiments, non-text input members 176 are dedicated to scrolling and selecting text. For example, right non-text input member 176R can be a track ball to be rotated in order to scroll over a text or to move a pointer, e.g., a mouse pointer, over display 102. Further, left non-text input member 176L can be a key to be pressed for selecting a text that is, for example, located under a mouse pointer. Because non-text input members 176 are located in the back of device 175, they can be actuated with the user's index fingers or other non-thumb fingers which touch the back of device 175. Thus, performing the additional functions does not interfere with the text entry performed by the thumbs, and the user need not look away from display 102.

In some embodiments, all alphabet characters in the language are assigned to an actuation of one of the input members. Therefore, in some embodiments more than one alphabet character is assigned to an actuation of the same input member. When entering a text, for each alphabet character the user actuates the input member to which the character is assigned. In various embodiments, a user actuates an input member by, for example, pressing, rotating, or tapping on the input member.

In some embodiments, different alphabet characters are assigned to different ways of actuating the same input member. In some embodiments, a device differentiates between different ways that the same input member is actuated. For example, a device differentiates between a short press and a long press of the same input member. In some embodiments, for a short press, the input member is pushed and released in less than half a second, while for the long press the input member is pushed, held for more than half a second, and then released. Other embodiments use different values for the duration of holding or different methods to differentiate between short and long press. For simplicity, when the device recognizes only one way of actuating an input member, and when a character is assigned to that actuation, it is stated that the character is assigned to the input member. Otherwise, if the device recognizes different ways of actuating the same input member, it will be specified to which actuation of the input member a character is assigned.

In Fig. 1A, display 102 displays visual guide 106, which shows the user which alphabet characters are assigned to each of the two input members 104. In the embodiment of Fig. 1A, visual display 106 displays all alphabet characters 108 in a QWERTY keyboard arrangement. Visual guide 106 also displays a vertical line 109 which partitions the QWERTY alphabet characters into a left character set 108L and a right character set 108R. Thus, in the embodiment shown in Fig. 1A, left character set 108L includes the set of alphabet characters QWERTASDFGZXCVB, and right character set 108R includes the set of alphabet characters YUIOPHJKLNM. In device 100, the alphabet characters are thus partitioned in accordance with the hand that presses the corresponding key in a conventional QWERTY keyboard. That is, alphabet characters in left character set 108L are those that are conventionally entered by one of the fingers of the left hand, and alphabet characters in right character set 108R are those that are conventionally entered by one of the fingers in the right hand. Because visual guide 106 is used to show to the user the key assignments for the alphabet characters, visual guide 106 need not be large. Thus, in some embodiments, visual guide 106 occupies a small section of display 102.

In device 100 of Fig. 1A, all alphabet characters in left character set 108L are assigned to left input member 104L, and all alphabet characters in right character set 108R are assigned to right input member 108R. Other embodiments partition the alphabet characters in other ways. For example, in some embodiments, characters are partitioned into the vowel characters (e.g., aeiouy for English) and the consonant characters (the remainder of the alphabet). Some embodiments are for entering text of a non-English language for which a full keyboard is designed with one key assigned to each character of the language. In those embodiments, the keys of the keyboard are partitioned into two sections and all characters in each of the two sections are assigned to the left input member 104L or the right input member 104R. Various such embodiments are used for entering text in non-English languages including various European languages (e.g., Spanish, French, etc.), Central European languages (e.g., Polish, Hungarian, etc.), Baltic languages (e.g., Lithuanian, Estonian, etc.), East Asian languages (Chinese, Japanese, Korean, etc.), Cyrillic, Arabic, Persian, Hebrew, Modern Greek, or Indian. In some embodiments, characters are assigned to each of the input members such that the total frequency of appearance of the group of characters assigned to each input member is as close to each other as possible. For example, in some embodiments, if the keys located near the middle of the keyboard can be assigned to either of the left input member 104L or the right input member 104R, those keys that correspond to characters with high frequency are equally divided between the left and right input members. Such assignment based on approximately equal distribution of frequency causes the user to push the left and right input members more evenly and also reduces the ambiguity in the entries, thus reducing the number of candidates which correspond to an actuation set.

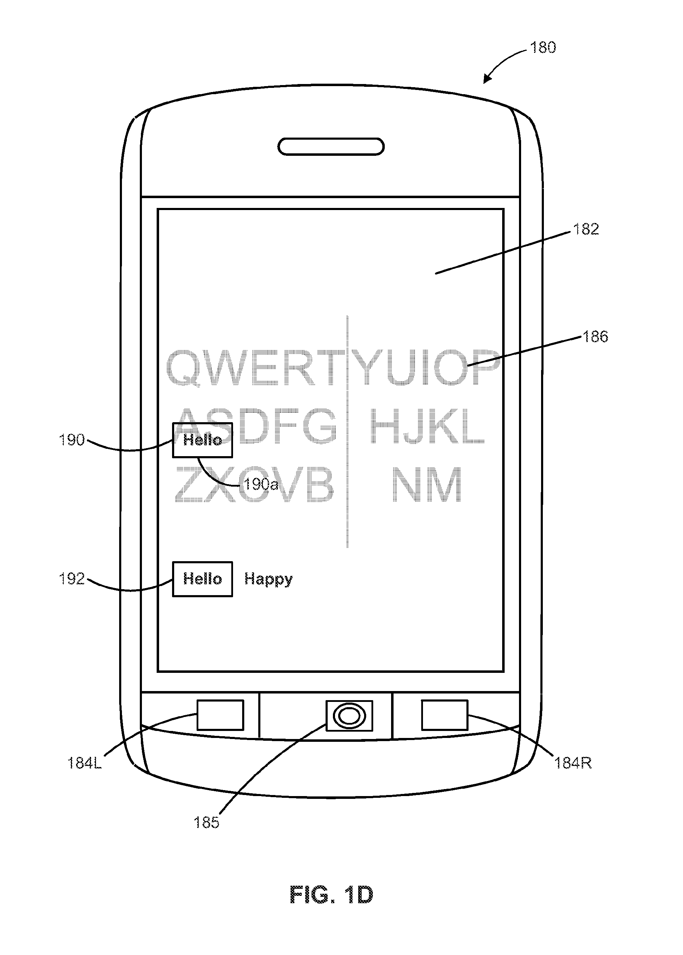

Fig. 1D shows a front view of a handheld electronic device 180 in accordance with another embodiment. In device 180, display 182, left and right input members 184L and 184R, entry section 190, and candidate section 192 are similar to their counterparts in Fig. 1A. Moreover, instead of visual guide 106, display 182 displays background visual guide 186. Background visual guide 186 is displayed as a vague background which is visible but does not drastically reduce the visibility of text displayed over it. Similar to visual guide 106, background visual guide 186 displays, for user's guidance, the key assignments for all alphabet characters. In particular, background visual guide 186 displays a key assignment similar to the key assignment shown by visual guide 106 in Fig. 1A.

A user need not memorize the assignments of alphabet characters to input member, and can use visual guides 106 or 186 to decide which of the input members to actuate. Therefore, the device can be used even by a beginner user. In some embodiments, devices 100 or 180 also provide a mechanism for a user to turn off the visual guides, if the user decides that she does not need such a guide. In some embodiments, this mechanism is provided as part of the settings of the device. If turned off, the visual guide is not displayed by the display. In some other embodiments, this mechanism is provided in response to a specific touch operation or in response to touching a specific section of the display. In some other embodiments, the visual guide automatically disappears when the user enters the text at a high speed, e.g., at least one character every second, indicating that the user is proficient in entry of the alphabet. In some other embodiments, when the visual display is not displayed, it reappears when triggered by an event. For example, in some embodiments, the visual display reappears if the user does not actuate a key for a specific length of time, e.g., two seconds.

In Fig. 1D, device 180 also includes a non-text input member 185. In some embodiments, non-text input member 185 can be, for example, a track ball, an optical sensor, a touch pad, or a button used for scrolling or selecting. A user can actuate non-text input member 185 using one of her thumbs, or by another finger. In various embodiments, non-text input member 185 is positioned away from each of input members 184L and 184R, such that the user can actuate both the non-text input member 185 and the corresponding input member with the same thumb with no need to look away from display 182 or no risk of misfingering.

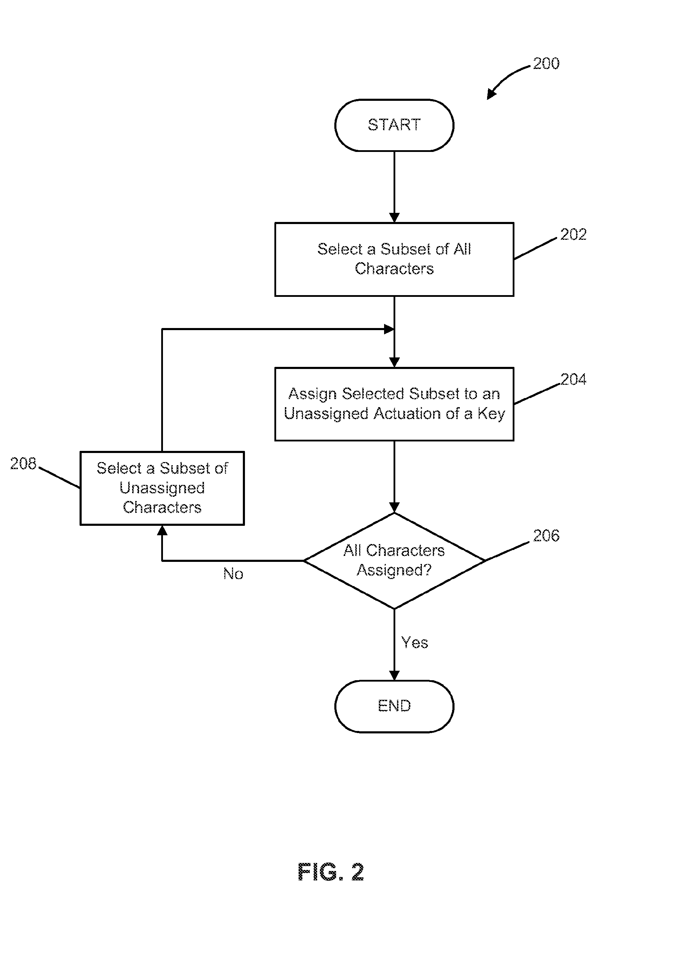

Fig. 2 illustrates an assignment method 200 performed by a handheld electronic device, e.g., device 100, in accordance with an embodiment. Assignment method 200 assigns all alphabet characters in the language to the set of input members. In block 202, a subset of all alphabet characters is selected for assignment. This initially selected subset is smaller than the set of all alphabet characters to be assigned. For example, according to a first embodiment, in device 100 the initially selected subset of characters consists of left character set 108L. In a second embodiment, the initially selected subset of characters consists of right character set 108R.

In block 204, the selected characters are assigned to an actuation of an input member to which no other subset of characters has already been assigned. In device 100, for example, characters in the initially selected left character set 108L are assigned to an actuation of left input member 104L.

In decision block 206, method 200 checks whether all characters have already been assigned. If they have (block 206: yes), assignment method 200 ends. Otherwise (block 206: no), the method advances to block 208, in which another subset is selected from the alphabet characters that have not been already assigned. In alternative embodiments, the newly selected subset corresponds to all or to a smaller subset of the alphabet characters that have not been already assigned. For example, according to the first embodiment above, in device 100 the newly selected subset of characters consists of all alphabet characters not already assigned, that is right character set 108R. In the second embodiment, the newly selected subset of characters consists of all alphabet characters not already assigned, that is left character set 108L.

The device then loops back to block 204, in which the newly selected subset of characters is assigned to an actuation of an input member to which no character has already been assigned. In device 100, for example, the newly selected right character set 108R is assigned to an actuation of right input member 104R. The sequence of blocks 204, 206 and 208 is iterated till all characters are assigned to an actuation of an input member. Thereafter, method 200 ends. Method 200, thus, generates an character-key mapping, which indicates to which input member each alphabet character is assigned.

In some embodiments, two different iterations of block 204 assign two different subsets of characters to two different actuation types of the same input member. In some embodiments, for example, the initially selected subset and the next selected subset respectively include all vowels and all consonants in the English language. In two iterations of block 204, the vowels are assigned to, for example, a long press of an input key, and the consonants are assigned to a short press of the same input key.

When entering each alphabet character of a text, the user actuates the input member to which the alphabet character is assigned. For simplicity, a set of actuations corresponding to a word or to part of a word entered by a user is called an actuation set. For device 100, an actuation set is represented by an actuation shorthand in which each actuation of left input member 104L is represented by a letter "L" and each actuation of right input member 104R is represented by a letter "R". A sequence of consecutive actuations of input members 104 are represented by a string of corresponding letters L or R sorted from left to right. For example, for the word "you" all three alphabet characters "y", "o", and "u", are assigned to right input member 104R. Therefore, to enter the word "you" right input member 104R should be actuated three times. The actuation shortcut for the word "you" is thus RRR. Similarly, because all three alphabet characters in the word "are" are assigned to left input member 104L, the actuation shortcut for the word "are" is LLL. In the same manner, the actuation shortcut for the word "hello" is RLRRR, because of the five letters in the word "hello", the second letter "e" is assigned to left input member 104L, and the remainder of the letters are assigned to the right input right input member 104R. Thus, to enter the word "hello", the user actuates input members 104 in the order RLRRR.

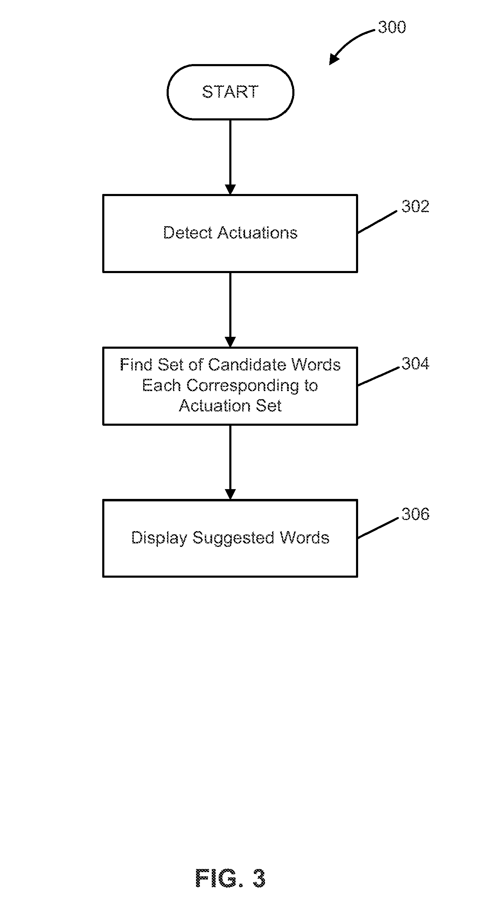

Based on the actuations entered by a user, device 100 determines a set of candidate words and displays those words for the user's selection. Fig. 3 illustrates a candidate set creation and display method 300 performed by a device in accordance with an embodiment. In block 302, the device detects an actuation set. In particular, a device may detect an actuation set by detecting a sequence of actuations followed by a pause. In various embodiments, the length of the pause varies, and is long enough to determine that the user has finished entering all characters for one word. Alternatively, after the device detects an actuation set and determines the corresponding words, the user does not make any selections and instead continue actuating input members 104. In that case the device adds the additionally entered actuations to previous actuation set and accordingly determine a new set of candidates.

In block 304, the device determines whether any words correspond to the detected actuation set, and if so, the device creates a set of candidate words each corresponding to the detected actuation set. To determine the candidate words, the device searches a database of linguistic objects for those words which correspond to the detected actuation set. In some embodiments, the database of linguistic objects is stored in a local memory in the device. In some other embodiments, the database of linguistic objects can be a remote database, e.g., a dictionary, which the device accesses through a network connection.

In some embodiments, the database of linguistic objects includes a majority or all of the words used in texts that are commonly typed in the language. For example, the database can be a general purpose dictionary of the words in the language. In some other embodiments, the database consists of a subset of the common words, or includes a list of uncommon words, which are specific to the application or to the context of text entry. For example, in some embodiments, when the user is filling in the "to" field of a message, the device uses the address book of the user to find the candidates for the desired email address or name of the recipient. Similarly, in some embodiments, when the user is filling the search field in a music player application, the device searches the play list of the user to find candidates for the desired name of the tune. Some of these words, e.g., a nickname in an address book, or the name of a tune, need not be a common word that is found in a general purpose dictionary of the language; instead the nickname or the name of the tune can be an artificial word created by the user or by the music band, respectively.

In some embodiments, to determine the candidate words, the device searches through a database of word-key mappings. A word-key mapping is a mapping which maps each word to a corresponding actuation set. The mapping is based on the characters that constitute each word uses the character-key mapping. So, for the example shown in Fig. 1A, the word-key mapping maps the word "are" to the actuation set LLL, and maps the word "hello" to the actuation set RLRRR. In some embodiments, the word-key mapping database is generated by the device and stored in a memory of the device. Alternatively, the word-key mapping database is stored remotely and accessed by the device via a network connection. In yet other embodiments, to determine the candidate words, the device uses disambiguation techniques that receive an ambiguous input and disambiguate the input by identifying a set of words that correspond to an ambiguous input.

In some embodiments, the word-key mapping database also maps some variants of an actuation set of a word with that word. In some embodiments, those variants include common typographically incorrect entries for the word. For example, the word "misspell" itself is often misspelled as "mispell". Thus, in some embodiments related to the display of Fig. 1A, the word "misspell" is not only mapped to the correct actuation set "RRLLRLRR", but also to the incorrect actuation set "RRLRLRR". In some embodiments, determined candidate words include words for which the actuation set is the same as, or includes, the actuation set entered by the user. For example, a user may enter the actuation set LLL. In some embodiments, the determined candidate words include three letter words for which the actuation set is LLL, e.g., "cat", "are", or "tag". Alternatively, the determined candidate words also include words, which have more than three letters, and which start with the actuation set LLL. These candidate words include, e.g., the words "cart" or "rating", for which the actuations sets are respectively LLLL and LLLRRL.

In block 306, after the device determines a set of candidate words, it displays some or all of the candidate words as suggested words. In Fig. 1A, display 102 includes an entry section 110 and a candidate section 112. Entry section 110 includes a active entry 110a, and candidate section 112 includes a selected candidate 112a. Entry section 110 displays the text that has been entered by the user. In the example of Fig. 1A, the user has entered the text "Hello, you are". For the last word entry, the user has actuated the actuation set LLL. Device 100 thus displays, in candidate section 112, a set of candidate words which correspond to an actuation set LLL. In Fig. 1A, candidate section 112 displays the candidate words "cat", "are", "rat", "war", "rex" , "tag" ,"war", "tag", "tar", "wax", "was" ,"arc" ,"art", ,"tea" and "car", all of which correspond to the actuation set LLL.

In some embodiments, the device uses a sorting algorithm to sort the determined candidate words in some order and display the candidate words in that order. In some embodiments, the candidate words are sorted by the frequency of their appearance in the language. In some other embodiments, the candidate words are sorted by the probability of their appearance in the entered text. In some embodiments, to find this probability, the device uses information about the context in which the text is being entered. In some other embodiments, the candidate words are sorted alphabetically. Yet, in some other embodiments, the candidate words are not sorted and are displayed in a random order.

In some embodiments, if the device can not fit all candidate in the display, the device displays the candidate words as a scrollable list. That is, the device displays a subset of the candidate words which can fit the display and allows a user to view additional words by scrolling down or up the list. For example, in Fig. 1A, device 100 displays candidate words in candidate section 112. In some embodiments, a user can scroll through the list with a horizontal finger gesture or by using a horizontal scroll bar. In some other embodiments, a user can scroll through the list by using a virtual "Next" button on the touch screen that allows the user to move to the next set of suggested words.

Once the device displays the candidate words, the user can select one of the displayed candidate words as the desired word. If the user does not find her desired word among the displayed words, the user may scroll down or up to see additional words from the candidate words. Once the user finds her desired word, she may then select the desired word by, for example, performing a select touch of the desired word, or actuating a non-text input member dedicated to selection.

In the example of Fig. 1A, the user has selected the word "are", which is the second word in the list of candidate words displayed in candidate section 112. As a result, a box indicating selected candidate 112a is placed around the word "are". Further, device 100 displays the selected word "are" as the last word in the entry section 110, displayed in a box as active entry 110a. If the user selects another word in the candidate section 112, the box for selected candidate 112a is placed over the new word in the candidate section 112 and the new word replaces "are" in the box for active entry 110a.

In some embodiments, once a user selects a word, device 100 inserts a space after active entry 110a and thus interprets subsequent actuations as entries for the next word in the text other entry. In other embodiments, the user inserts a space by other means, e.g., by actuating a non-text input member, performing a touch operation, or touching a section of the display, e.g., space section 177S in Fig. 1B, which is dedicated to entering a space. Similarly, in some embodiments, a user deletes the word by selecting the word, and actuating a non-text input member, performing a touch operation, or touching a section of the display, e.g., delete section 177D in Fig. 1B, which is dedicated to adding a space.

Similarly, in some embodiments, if the user wants to change the last entry, the user erases or deletes parts or all of the lastly entered actuations. A user performs such a deletion by using an appropriate non-text input member, performing a touch operation, or touching a section of display 102 dedicated to deleting last actuation or last actuation set. In some embodiment a user can erase last actuation set by selecting and deleting active entry 110a. In various embodiments, after a space is entered, or an actuation set is deleted, or a word in active entry 110a is deleted, device 100 interprets next set of actuations as belonging a new actuation set and uses those actuations for determining a new set of candidates.

Further, in some embodiments, a handheld electronic device also provides a mechanism for entering non-alphabet characters, e.g., punctuations or carriage returns, such as the comma and the new line after "Hello" in Fig. 1A. In some embodiments, a user can enter such characters using non-text input members. In some embodiments, such characters are displayed at some section of the display and the user enters one of them by performing a touch operation. In some embodiments, a user also capitalizes one or more of the entered letters using a similar mechanism. In yet other embodiments, the device capitalizes the first letter of a first word in a sentence identified as, e.g., the first word in a text or after a period. In some other embodiments, the device predicts an appropriate punctuation and provides it as part of some candidates. For example, in the example of Fig. 1A, after the user enters the actuation set for "Hello", the device displays both "Hello", and "Hello," as candidates. Similarly, in some embodiments, when the user enters the words "How are" and then enters the actuations for the word "you", the device displays both "you" and "you?" as candidates.

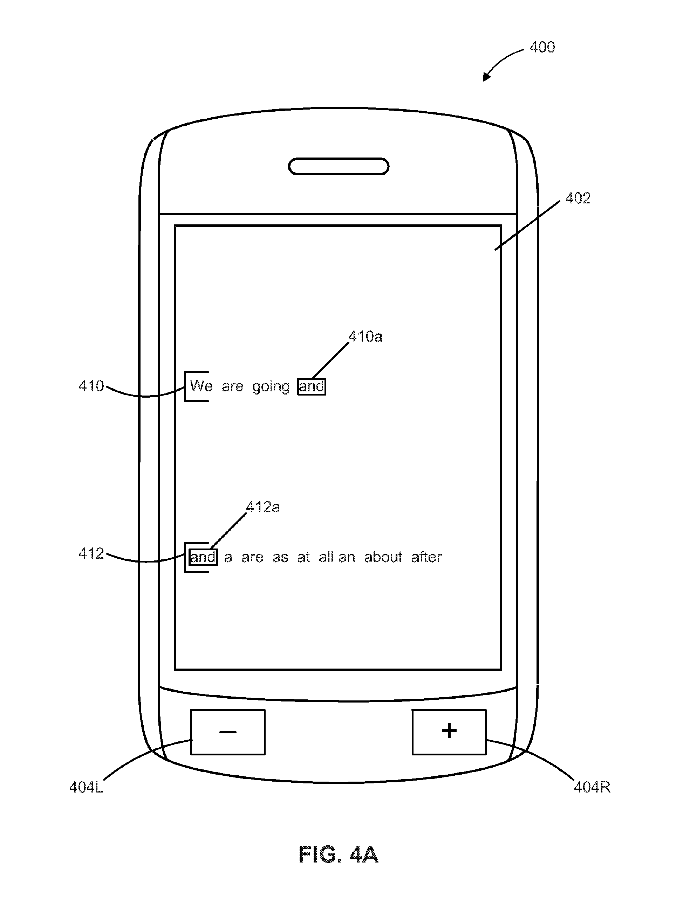

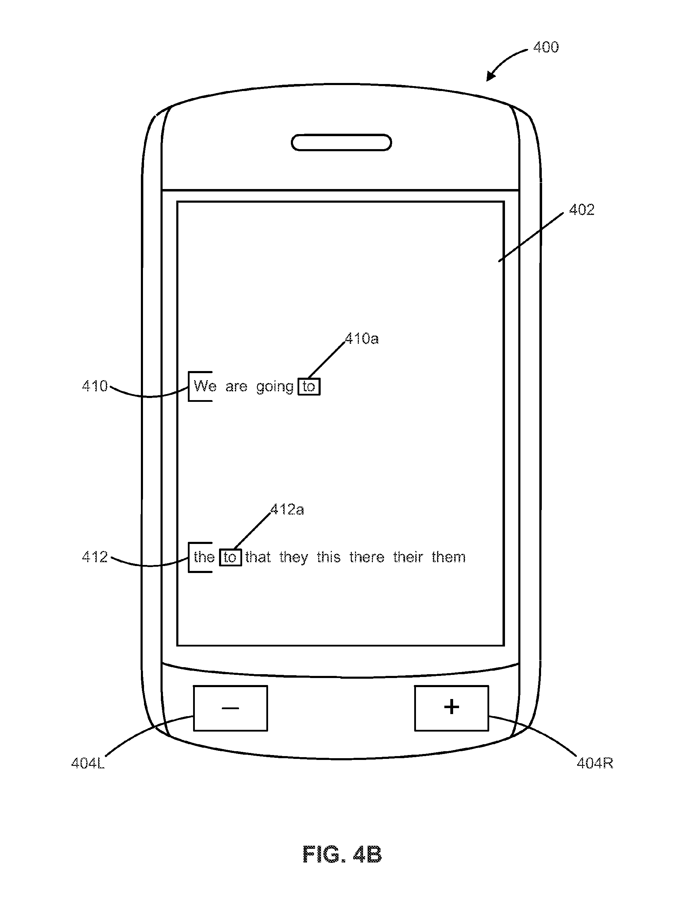

In some embodiments, a user can enter text by methods other than entering each character in a word. Figs. 4A and 4B show front views of a handheld electronic device 400 in accordance with such an embodiment. Device 400 includes display 402 and left and right input members 404L and 404R. Unlike input members 104 in device 100, actuating input members 404 does not trigger entry of characters of entered text. Instead, input members 404 are actuated to enter the frequency of the first letter in the next word. The frequency of a first letter indicates the relative number of times each letter appears as the first letter of a word. For example, in English language, the most frequent first letter is the letter "a", followed by the letters "t" and "s", respectively. In the embodiment of Figs. 4A and 4B, for example, left input member 404L decreases desired frequency of the first letter, while the right input member 404R increases the desired frequency of the first letter.

In the example shown in Fig. 4A, the user has already entered the first three words and intends to enter the fourth word in the phrase "We are going to". The user enters the next word by actuating input members 404 until device 400 displays the desired word in candidate section 412.

In some embodiments, device 400 first determines a default set of candidate words as the words with the most frequent first letter (e.g., "a" in English language) and displays them in candidate section 412. Further, in the example shown in Fig. 4A, device 100 sorts the candidate words by their frequency of appearance in the language. Moreover, by default, the first word ("and") in candidate section 412 is first highlighted as selected candidate 412a, and also shown as active entry 410a in entry section 410.

Because the desired next entry ("to") is not displayed in candidate section 412, the user actuates left input member 404L to move to the next set of words. Upon actuation of left input member 404L, device 400 displays the next set of candidates as shown in Fig. 4B. In Fig. 4B, device 400 displays candidates which start with the second most frequent first letter ("t") and further sorts those candidate words in decreasing order of frequency. Because the desired next word, i.e., "to", appears as the second entry in candidate section 412, user selects this entry, which thus replaces "and" as active entry 410a. Device 400 then proceeds to displaying candidates for the next entry. In some embodiments, device 400 selects and sorts the list of candidates 412 based on the relationship of each candidate to the previously entered words, as discussed in more detail below. For example, in Fig. 4B, some embodiments of device 400 display the word "to" before other words in candidate list 412, because the word "to" is the most likely candidate to appear after the words "We are going". Device 400 thus sorts candidate list 412 in accordance to each candidate's relevance to the previous text and allows the user to scroll through the list and select a desired word.

In some other embodiments, input members 404 are actuated to enter the frequency of the desired word. A frequency of a word indicates the likelihood that the word appears in the language. Thus, in some embodiments device 400 changes the list of candidate words to include less common words if the user decreases the frequency input by actuating left input member 404L. Conversely, device 400 changes the list of candidate words to include more common words if the user increases the frequency input by actuating right input member 404R.

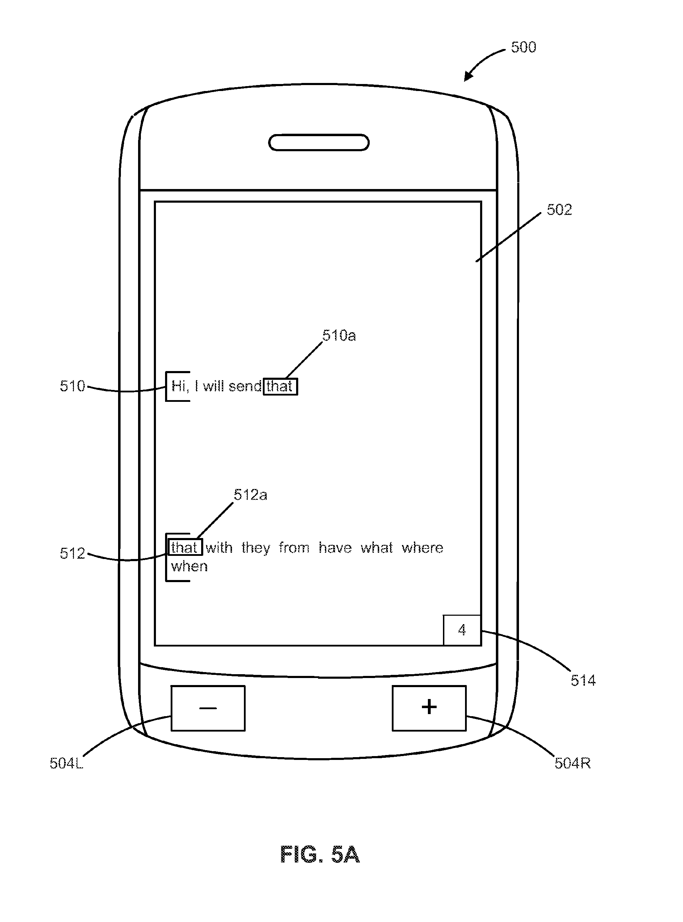

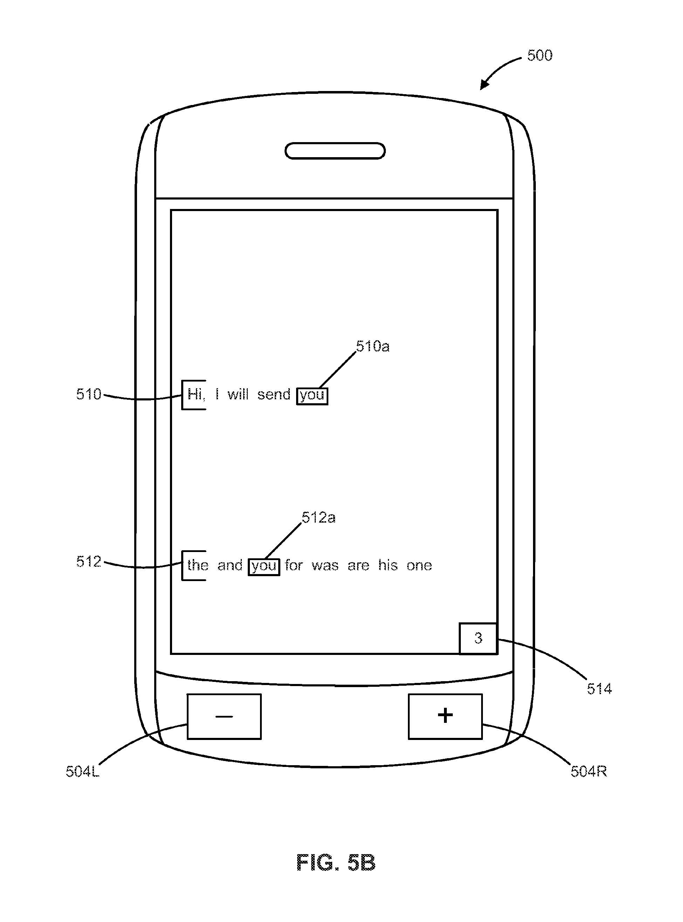

In some embodiments, actuation of input members increases or decreases the number of letters in the candidate entries. Figs. 5A and 5B show front views of a handheld electronic device 500 in accordance with such an embodiment. Device 500 includes display 502 and left and right input members 504L and 504R. Input members 504 are actuated to enter the number of letters in the desired word. In the embodiment of Figs. 5A and 5B, for example, left input member 504L decreases and right input member 504R increases the number of letters in the candidate words.

In the example shown in Fig. 5A, the user intends to enter the word "you" as the next word in the phrase "Hi, I will send you". In the embodiment shown in Fig. 5A, by default, device 500 first shows candidates with the most common number of letters in the language. Further, device 500 displays the candidate words in the decreasing order of frequency. In Fig. 5A, it is assumed that the most common number of letters in English language is four. Thus, device 500 first displays, in candidate section 512, the most common four letter words in descending order of frequency. That is, in this example, it is assumed that the most common four letter words in English language are respectively "that", "with", "they", etc., as displayed in candidate section 512. In some embodiments, device 500 also displays the selected number of letters (here four) in letter-number 514.

Because the desired word "you" is not a four letter word, the user actuates left input member 504L to decrease the number of desired letters to three. As a result, device 500 changes the display as seen in Fig. 5B. In Fig. 5B, letter-number 514 displays the selected number of letters as three. Further, candidate section 512 displays most common three-letter words in descending order of frequency in English language. The user thus finds and selects the desired word "you", which replaces the previously displayed word as the active entry 510a. In some embodiments, if the number of letters is correct but the desired word is not one of the words that are displayed in the list of suggested words, the user can navigate through the list by scrolling through the list until the desired word is found.

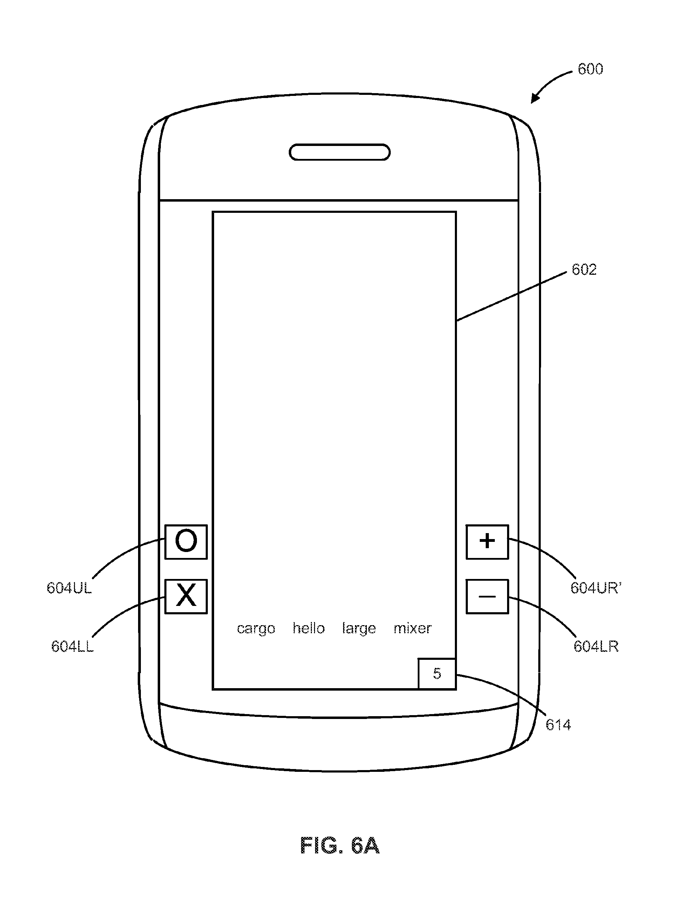

In some embodiments, a handheld electronic device includes a combination of the input members described in devices 100, 400, or 500. Fig. 6A shows a front view of a handheld electronic device 600 in accordance with such an embodiment. Device 600 includes a display 602, and four input members 604. In particular, upper left and lower left input members 604UL and 604LL are located on the left hand side of display 602, while upper right and lower right input members 604UR and 604LR are located on the right hand side of display 602. Device 600 is designed such that a user, while holding device 600, can position her left thumb over each of left input members 604UL and 604LL and her right thumb over each of right input members 604UR and 604LR. Further, the user can move her thumbs up or down to actuate either the upper or the lower input member positioned under that thumb, without looking away from the display. Moreover, left input members 604UL and 604LL or right input members 604UR and 604LR are sized large enough and space apart to minimize misfingering.

In device 600, for example, left input members 604UL and 604LL are designated to entering one or more alphabet characters of desired words, in a manner similar to that described above in connection with device 100. The right input members 604UR and 604LR, on the other hand, are designated to entering the number of characters in the desired words, in a manner described above in connection with device 500. For example, left input members 604UL and 604LL can respectively be actuated for entry of a vowel and a consonant. Right input members 604UR and 604LR, can respectively be actuated for increasing or decreasing the number of letters in the candidates, as displayed in letter-number 614. A user can thus find the desired word more quickly by entering both one or characters and the number of characters in the desired words.

In the example shown in Fig. 6A, the desired word is "hello". The user has entered the actuation set XOX for the first three letters of the desired word. In actuation short cut XOX, an "X" represents an actuation of lower left input member 604LL for entering a consonant, and an "O" represents an actuation of upper left input member 604UL for entering a vowel. Moreover, using right input members 604UR and 604LR, the user has entered letter-number "5", for the number of letters in the desired word. Device 600 has thus determined a set of candidate words "cargo", "hello", "large", and "mixer", all of which start with the actuation set XOX and have five letters. The user can thus select the desired word "hello" from the candidate words.

In some other embodiments, input members 604UR and 604LR, can be actuated for increasing or decreasing the frequency of the candidate words. A user thus increases speed of text entry by entering one or more characters of the desired word by actuating input members 604UL and 604LL and entering the frequency of the desired word using left input members 604UL and 604LL.

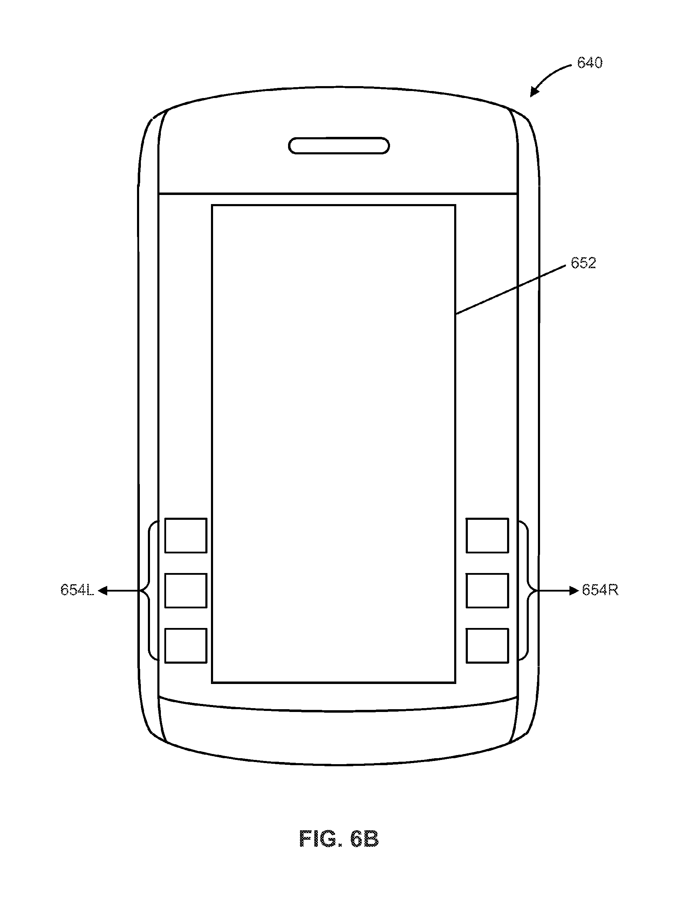

In some embodiments, handheld electronic device 600 includes more than two input members on the left or on the right side of the display. Fig. 6B shows a front view of a handheld electronic device 650 in accordance with such an embodiment. Device 650 includes a display 652, a set of three left input members 654L aligned in one column on the left of display 652, and a set of three right input members 654R aligned in one column on the right of display 652. With only three input members on each side, the input members can be sized and spaced such that the user can actuate them without looking at them. The input members are sized and spaced such that a user, while holding device 650, can position a corresponding left or right thumb over one of the input members on the right or on the left. The user is also able to move her thumb up and down to actuate either of the three input members without looking away from the display and without moving the base of her thumb. With this arrangement, the risk of misfingering is also minimized. If the alphabet characters in a language are partitioned into three subsets of alphabet characters, each subset can be assigned to one of the three left input members 654L. Such partitioning into three subsets may be more natural than partitioning into two subsets in, for example, some languages with non-Latin alphabet.

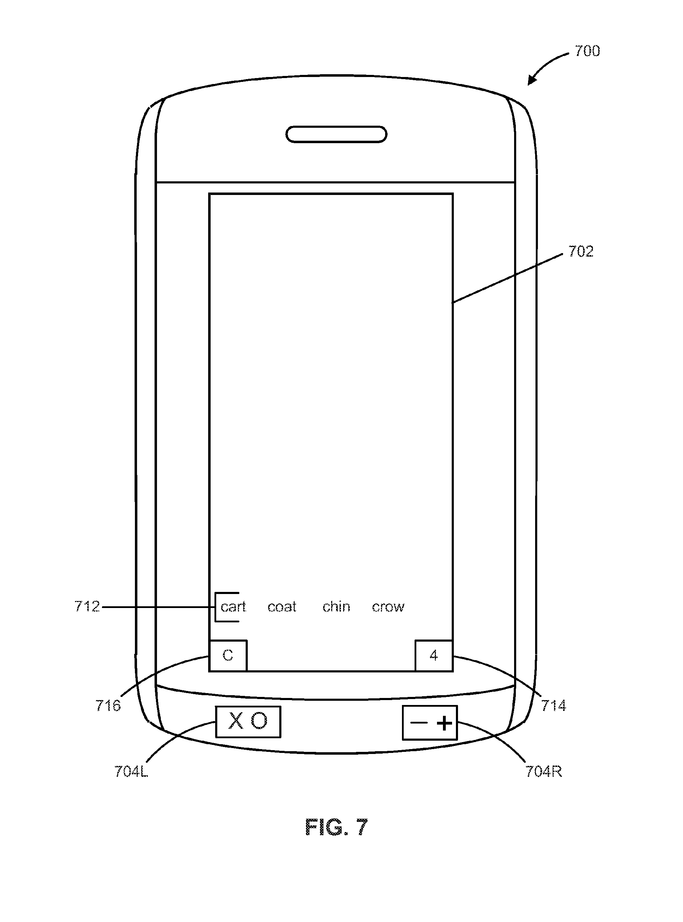

In some embodiments, a handheld electronic device combines the functionalities of the input members described in devices 100, 400, or 500 without increasing the number of input members. Fig. 7 shows a front view of another handheld electronic device 700 in accordance with such an embodiment. Device 700 includes a display 702 and two input members 704L and 704R. In the embodiment shown in Fig. 7, different subsets of alphabet characters are assigned to different types of actuations of left input member 704L. In some embodiments, for example, a long press of left input member 704L enters a vowel and a short press of left input member 704L enters a consonant. Alternatively, in other embodiments, a long press of left input member 704L enters left character set 108L of Fig. 1A and a short press of left input member 704L enters right character set 108R of Fig. 1A. Similarly, short and long presses of right input member 704R can be assigned to increasing or decreasing the number of letters in the candidates, as displayed in letter-number box 714.

In some embodiments actuating left input member 704L selects the first letter of the candidate words, shown in first-letter box 716, by scanning over a list of alphabet characters which, e.g., starting from "a" and ending in "z". Similarly, actuating right input member 704R changes the number of letters in the candidate words shown in letter-number box 714. In some embodiments, device 700 differentiates long and short presses of one or more input members 704. For example, in some embodiments device 700 advances the first-letter box 716 forward in the list of alphabet in response to a short press of left input member 704L, and moves it backward in the list in response to a long press of left input member 704L. Similarly, in some embodiments device 700 increases letter-number box 714 in response to a short press of right input member 704R and decreases letter-number box 714 in response to a long press of right input member 704R. In some embodiments, left input member 704L and right input member 704R perform the above functions in the same device and thus the user can at the same time select the first letter and the word length of the candidate words to arrive at the desired word.

Alternatively, in some embodiments device 700 does not differentiate between short and long presses of either or both input members 704 and instead advances the corresponding parameter over a cyclical list. In other words, as user presses left input member 704L, device 700 changes the first letter of the candidate words, by cycling over all alphabet characters, and displays the first letter as the first-letter box 716. Also, as the user presses right input member 704R, device 700 changes the number of letters in the candidate words, by cyclically increasing it from a minimum number (e.g., one in English language) to a maximum number (e.g., twenty in English language) and displays the number in letter-number box 714. In some embodiments, device 700 uses the cyclical span of letters not only for entering the first letter of a word, but for entering other letters of the words.

In the example shown in Fig. 7, the user has selected the letter "c" as the first letter shown in first-letter box 716 and has also chosen four as the number of letters in the desired word, as shown in letter-number box 714. Device 700 has accordingly determined the candidate words "cart", "coat", "chin", and "crow", and displayed them in candidate section 712.

In some embodiments, device 700 also filters or sorts the list of candidates based on the context in which the text is entered. In various embodiments, the context corresponds to, the previously entered text, the type of application in which the text is entered, the user who is entering the text or the recipient of the text, or a previous text in response to which the text is entered. For example, in Fig. 4A device 400 eliminates some of the candidates, e.g., "a", "are" or "an", because these words cannot grammatically follow the words already entered ("We are going"). Similarly, in some embodiments if the text is a message from the user to another user, device 700 reorders candidate words in accordance to the priorities, or common vocabulary used between the sender and the recipient. For example, a message between two friends is more likely to start with "hi" or "hey", while an official message is more likely to start with "Hello", or "Dear". Therefore, in the first context, if these words are among the candidate words, device 700 places "hi" or "hey" before "hello" in the list of candidate words, but in the second context places "hello" before "hi" or "hey".

Further, in some embodiments if the message is a response to or a follow-up of a previous message, device 700 filters or reorder candidates accordingly. For example, in a response to a message with a title about restaurants, the context is culinary, and the message is more likely to include food related words compared to transportation related words.

Moreover, in some embodiments when the context is conversational, device 700 filters, reorders, or predicts the candidates based on the user's commonly used words in similar previous contexts. Further, in various embodiments the context also includes the specific user who is entering the text, or the recipient of the text, or both. A conversational context can, for example, correspond to a text message exchange, a chat, or an SMS message, in which two or more users exchange short texts. In some embodiments, before the user makes any entry for the next word of a conversation, device 700 predicts the next word or the first letter of the next word to be entered by the user based on the words that the user commonly types in similar contexts.

More specifically, in various embodiments, when the user is responding to a message from another person, the device predicts the user's first word based on one or more factors, such as the type of the message, the user's common answers to that type of message, the user's relationship with the other person, the user's commonly used words when communicating with that person, or the category of people to which the user or the other person belongs. For example, in response to a message, "how are you?", the user may commonly answer "Good", "Fine, thanks", or "OK". In this case, the device will propose the candidate words "Good", "Fine", and "OK", or the letters "G", "F", and "O". Further, in some embodiments, if the recipient is an acquaintance, the less formal response "OK" is proposed before the more formal response "Fine, thanks", and otherwise the response "Fine, thanks" is proposed before the response "OK". In various embodiments, the decision is based on previous responses typed by the same user in a similar context or in exchanges with the same recipient, or both factors. Moreover, some embodiments are enabled to enter text in more than one language. In some of those embodiments, the device determines the language for a text entry based on one or more factors that determine the context, such as the language commonly used by the user in general or in particular when communicating with a specific recipient, previous words, or the message to which the user is replying.

Alternatively, when the user is initiating a text in a specific conversational context, the device may predict the user's words based on the common ways the user drafts similar texts, and may additionally consider the recipient of the message. For example, the user may commonly start her messages with "hey", "hi", "hello" or "what are you up to." Then, at the start of a new message, the device will predict and propose to the user the words "hey", "hi", "what", or the letters "h", and "w". In some embodiments, the proposed word also depends on the recipient, or previous messages sent by the user to the same recipient. For example, in exchanges with an acquaintance, the less formal word "hey" is more likely to be proposed, while in exchanges with others the word "hello" is more likely to be proposed.

In various embodiments, the handheld electronic device uses the context information, e.g., the conversational context, or the history of the user's previous text entries in a similar context or to the same recipient, along with the other inputs from the user, to predict, to sort, or to limit the candidate words. In some other embodiments, even before the user makes other inputs, the handheld electronic device uses the context information, e.g., the conversational context, or the history of the user's previous text entries in a similar context or to the same recipient, to predict, to sort, or to limit candidates for the next entry by the user. In various embodiments, to use the history of the user's previous text entries in a conversational context, the handheld electronic device stores, in its memory, a history of the typical messages sent by the user at the start of a conversation, or in response to a specific message. In various embodiments, the device also stores the recipient of the text and the specific message.

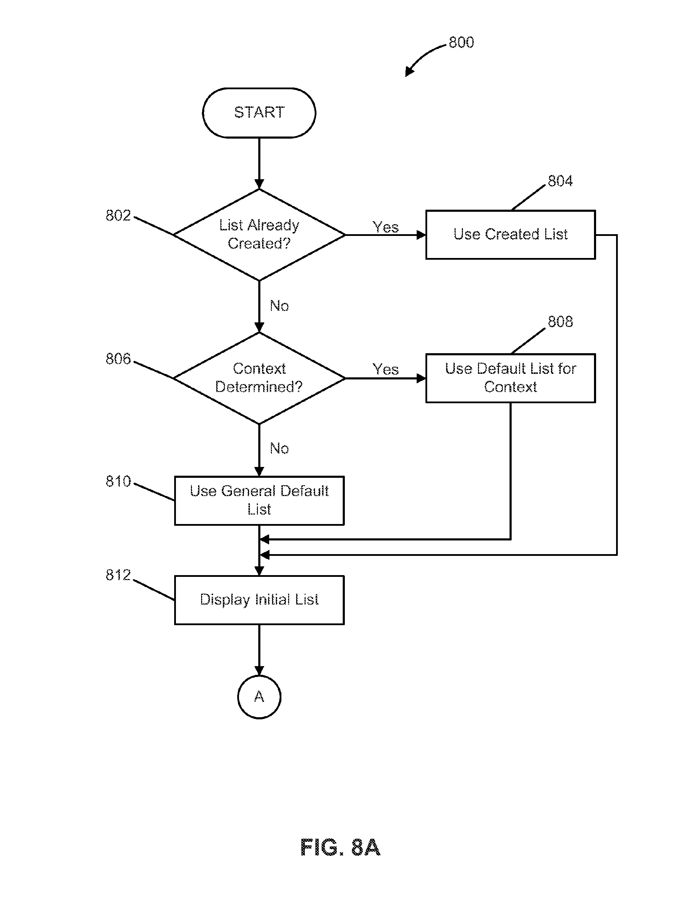

Figs. 8A-8C illustrate a text creation method 800 performed by a handheld electronic device, in accordance with various embodiments. In method 800, the device displays candidate words and makes a selection based on inputs from the user. To begin, in blocks 802-810, the device determines an initial set of candidate words. To that end, in block 802, the device checks whether a list of candidates has already been created. In some embodiments, the list of candidates is created based on, e.g., a set of actuations which correspond to a set of alphabet characters in the desired word. Some examples of creation of such a candidate list is described above in relation to, e.g., Fig. 1A and method 300 in Fig. 3. If a candidate list has already been created (block 802: yes), in block 804 the device uses that list as the initial list for the candidate words.

If no previously created list exists (block 802: no), in block 806 the device checks whether a context is determined in the manner described above. If the context is determined (block 804: yes), in block 808 the device retrieves a default list of candidate words associated with that context. In some embodiments, for example, the context is determining the starting word of a message. In this context, the default candidate list includes the words that are the most common words for starting a message, e.g., "Hi", "Hello", "Hey", "How", or "Dear". Alternatively, in some embodiments the context is adding the next word to the previously entered phrase, e.g., "Dear sir, I am". In this context, the default candidate list includes the words that are most likely to follow the previously entered phrase, e.g., "writing", "following", "inquiring", "wondering" or "the" to follow "Dear sir, I am".

If no context has been determined (block 804: no), the device proceeds to block 810. In block 810, the device uses a general default list of words as the initial list for the candidate words. In some embodiments, the general default list of words is the most frequently used words in the language. Thus, the general default list of words in English includes the words "the", "be", "to", "of", "and" ,"a" etc.

In block 812, the device displays the list of candidates in, e.g., candidate section 112. Further, in some embodiments the device highlights the first word in the list as selected candidate 112a, and also display it as the desired word, i.e., active entry 110a.

In blocks 812-824, the device modifies the candidate list based on the context or entries from the user. In particular, in block 814, the device determines whether the user has entered one or more criteria for the first character of the desired word. In some embodiments, a user enters such a criterion as described, for example, in relation to device 400 and device 700. If such a criterion has been entered (block 814:yes), in block 816 the device removes from the candidate list those words which do not satisfy the criterion. In some embodiments, the device also adds additional words to the candidate list, in accordance to the criterion.

In block 818, the device determines whether the user has entered a parameter indicating the frequency of the desired word. In some embodiments, a user enters such a frequency criterion as described, for example, in relation to device 400. If such a frequency has been entered (block 818:yes), in block 820 the device removes from the candidate list those words which do not satisfy the frequency criterion. In some embodiments, the device also adds additional words to the candidate list, in accordance to the frequency criterion.

In block 822, the device determines whether the user has entered a parameter indicating the length of the desired word. In some embodiments, a user enters such length criterion as letter-number 614 or 714 described in relation to devices 600 and 700. If such a length criterion has been entered (block 822:yes), in block 824 the device removes from the candidate list those words which do not satisfy the length criterion. In some embodiments, the device also adds additional words to the candidate list, in accordance to the length criterion.

In block 826, the device checks whether a context is determined for the text entry. If such a context is determined, (block 826:yes), in block 828 the device removes from the candidate list those words which do not fit the context. In some embodiments, the device also adds additional words to the candidate list, in accordance to the context.

In some embodiments, a handheld electronic device applies one or more of the above criteria as approximate criteria, and not as exact criteria. For example, when a user enters a length criterion indicating a seven letter word, the device interprets the length criterion to include words for which the number of letters is six, seven, or eight. Further, in some embodiments, when a user enters a large value for the length criterion, the device will interpret the value as a lower limit for the length. For example, when a user enters ten for a length criterion, the device will include words with number of letters being ten or more. Such flexibility allows for, e.g., situations in which the user miscalculates, or is not certain, about the length. Similarly, when the user enters a word frequency, the device interprets the criterion not as specifying words with some exact frequency, but as words for which the frequency is in a specific frequency range. Also, when a user increases or decreases the frequency, in some embodiments the device interprets the change as specifying words for which the frequency is slightly higher or slightly lower than the previous set of words. The device, thus, increases or decrease the considered frequency range in some incremental stages.

In steps 830-836, the device displays the modified list of candidates, receives a user selection, and determines the desired word. In particular, in block 830, the device displays the updated list of candidates, e.g., in candidate section 112. Further, in some embodiments the device highlights the first word in the list as the default selected selection, i.e., selected candidate 112a, and also display it as the desired word, i.e., active entry 110a.

In block 832, the device determines whether the user has made an entry which indicate selection of one of the words in the candidate list. If the user has made such an active selection (block 832: yes), in block 834 the device replaces the default selected word with user's selected word by, e.g., inserting the selected word as active entry 110a in entry section 110. If the user does not make a selection (block 832: yes), the device maintains the default selection as the selected word. When the user pauses, or does not make another entry (e.g., a selection, or a change in one of the criteria) for a specific period of time, in some embodiments the device interprets the user's inaction as a passive selection of the already selected word. In some embodiments, a pause is set to be an inaction by the user for a second or later. In other embodiments a pause is defined as a different length of time. In some embodiments, the device does not interpret inaction as passive acceptance of the default selection and waits till the user makes an active selection. Thus, to insert a word as an entered text, the user must make a selection, e.g., by touching the word on the screen, or actuating a non-text input member.

In block 836, the device uses the selected word as the desired word, inserts the word in the text, e.g., as active entry 110a, and ends method 800. In some embodiments, the device inserts a space after the last word and proceed to accepting entries for the next desired word. If the user makes an error in her active selection or inactive selection, the device provides mechanisms for the user to delete the last word or correct errors in the entries, as described above.

In some embodiments, to determine a candidate list and to select a word, a handheld electronic device performs a subset of the steps in method 800. For example, in some embodiments in which the device is not capable of determining the context, or does not have a default list for a context, the device does not perform blocks 806, 808, 826, or 828. Similarly, in some embodiments in which the device is not capable of receiving criteria for the first character, for the frequency, or for the length of the word, the device does not respectively perform block pairs 814-816, 818-820, or 822-824.

Further, in some embodiments a device does not determine or display an initial list for candidate words, and thus not perform blocks 802-810. In some embodiments, a handheld electronic device determines a candidate list solely based on the user's actuations corresponding to all or some of the characters in the desired word, as described, for example, in relation to Fig. 1A.

Also, in some embodiments a handheld electronic device performs all or a portion of method 800 after each actuation by the user. That is, while the user enters each character of the desired word or enters other parameters, e.g., word length, the device updates the candidate list based on the latest entry and redisplays the candidate list. Alternatively, in some other embodiments, the handheld electronic device performs all or a portion of method 800 after two or more entries by the user, or after the user makes a groups of entries and pauses for a specific period of time. In some embodiments, such a pause indicates that the user has finished making all entries corresponding to the desired word and expects the device to display the candidate words.

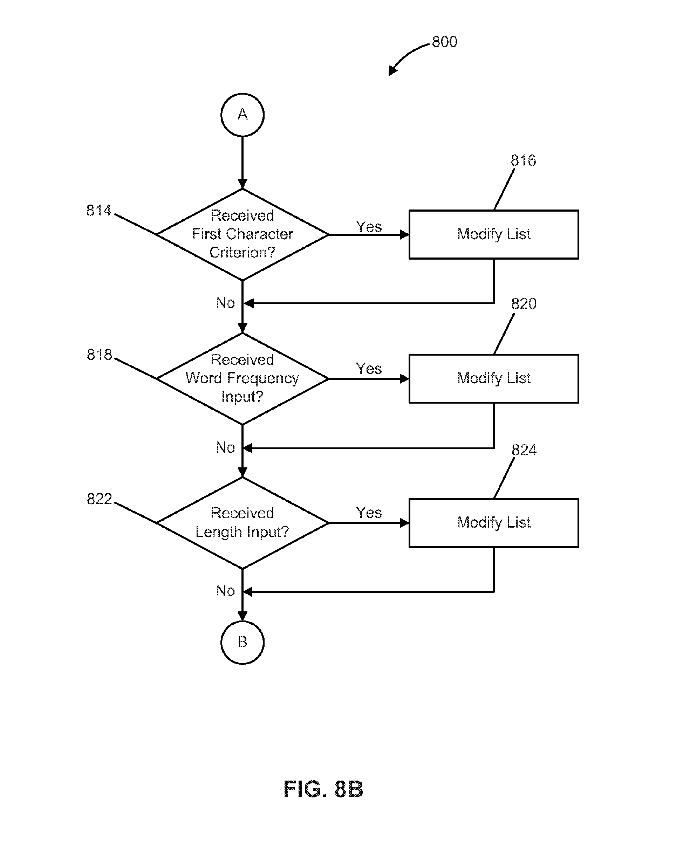

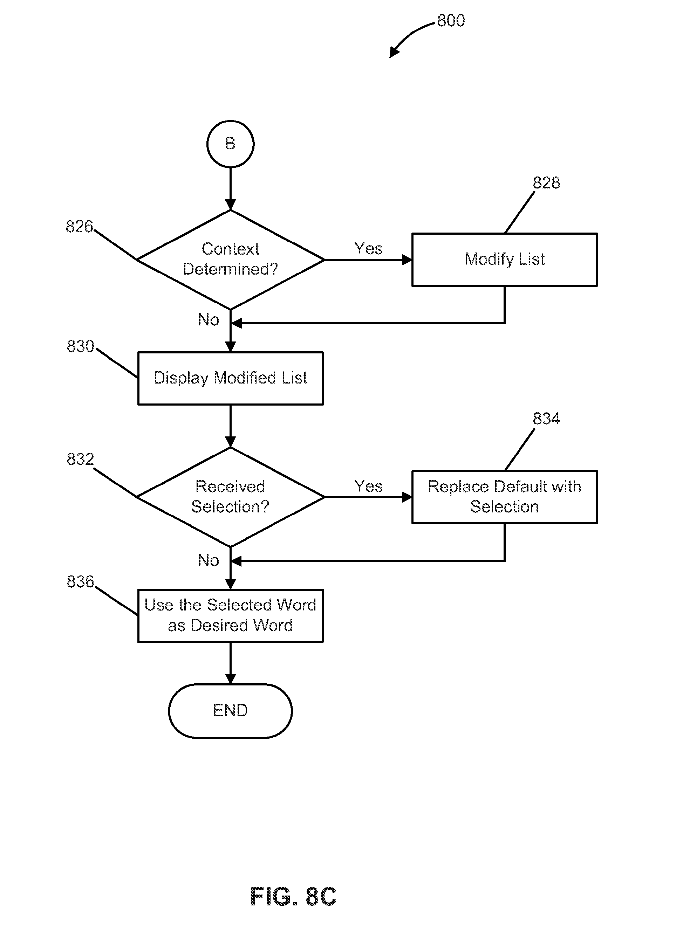

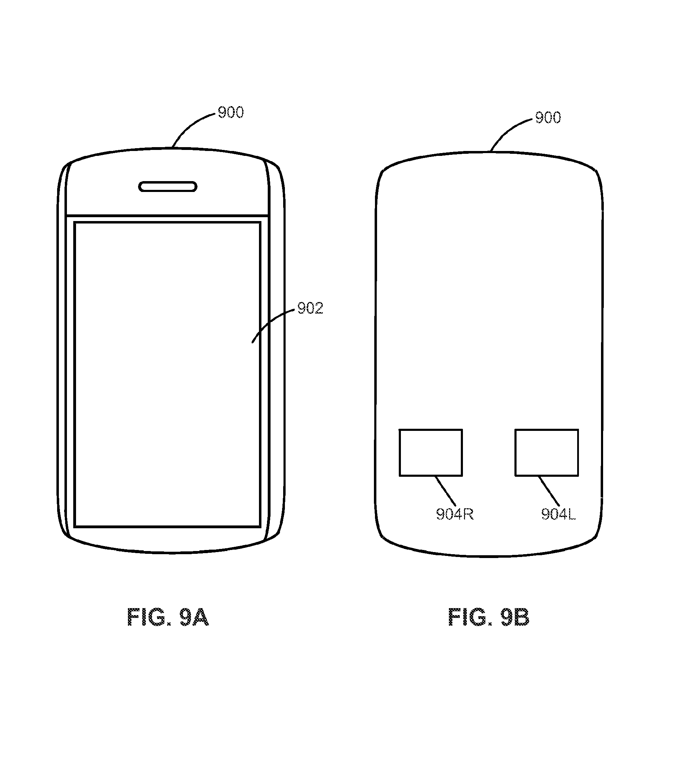

In some embodiments, a handheld electronic device is designed such that a user uses fingers other than her thumbs to actuate input members for alphabet characters. Figs. 9A and 9B respectively show front and rear views of a device 900 according to such an embodiment. Device 900 includes display 902 in the front, and left and right input members 904L and 904R in the rear. Because input members 904 are not located in the front of device 900, device 900 can allocate more space to display 902. Positioning input members in the back of device 900 is made possible because the user need not look at the input members when entering a text. Moreover, input members 904L and 904R are positioned such that they can be actuated by one or more fingers which touch the back of device 900, while the user is holding device 900. For example, in Fig. 8, in some embodiments input member 904 is actuated by the user's index fingers. In some embodiments, input members are located in other positions, e.g., on the side of the handheld electronic device, in a position that can easily be actuated by the user's fingers.

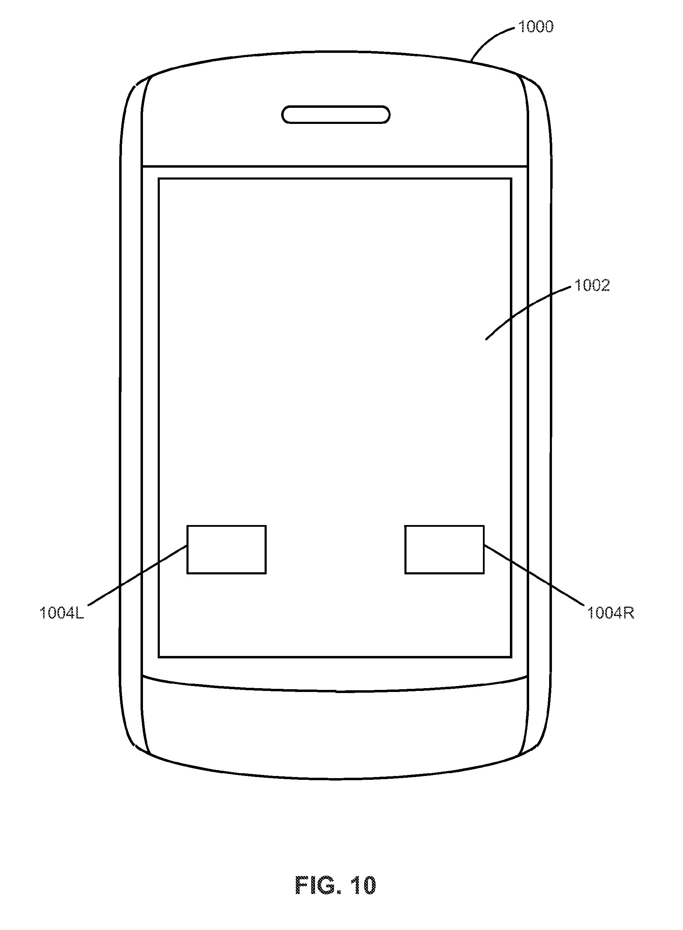

In some embodiments, the handheld electronic device uses virtual keys as input members. Fig. 10 shows a front view of a handheld electronic device 1000 in accordance with such an embodiment. Device 1000 includes a display 1002. Display 1002 displays virtual input members 1004L and 1004R. Virtual input members 1004 are located in touch-sensitive locations of display 1002. A user can actuate virtual input members 1004 by touching their location on display 1002. Virtual input members 1004 perform functions similar to the functions of input members 104 in Fig. 1.

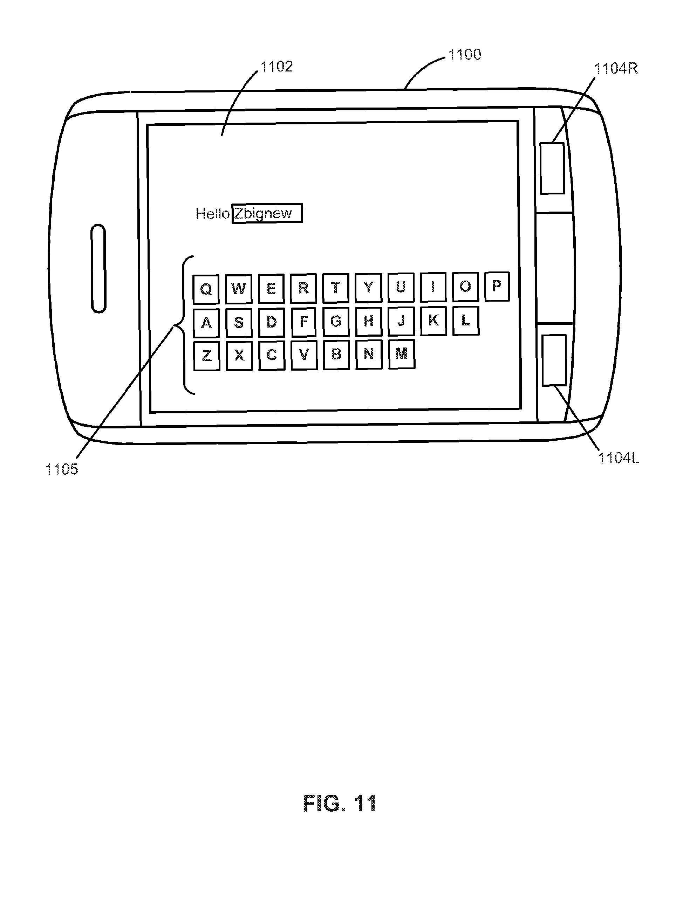

In yet other embodiments, a handheld electronic device provides other text entry mechanisms in addition to actuation of input members in the manner described above. Fig. 11 shows a handheld electronic device 1100 in accordance with such an embodiment. Device 1100 includes a touch-sensitive display 1102 and input members 1104L and 1104R. Input members 1104 function in a manner similar to input members 104 in device 100. Device 1100 also provides virtual keypad 1105 for text entry. In particular, virtual keypad 1105 appears on touch-sensitive display 1102 whenever device 1100 is held horizontally, i.e., in the landscape orientation shown in Fig. 11. A user can hold device 1100 vertically (portrait orientation) and enter text using input members 1104 in a manner similar to entering text with device 100. However, a user can also enter text in a different manner. For example, the user may prefer using a full QWERTY keyboard if the user wants to enter a rare word or name which may not exist in the linguistic database of the device. In such cases, the user rotates device 1100 to the landscape orientation shown in Fig. 11. Upon detecting such rotation, device 1100 displays virtual keypad 1105, and enables receiving individual characters from the virtual keys in virtual keypad 1105. To display virtual keypad 1105, in some embodiments device 1100 removes from the display some other objects, e.g., visual guide 106 or background visual guide 186, which are not necessary when using virtual keypad 1105. In some other embodiments, the device displays virtual keypad 1105 and one of visual guide 106 or background visual guide 186.

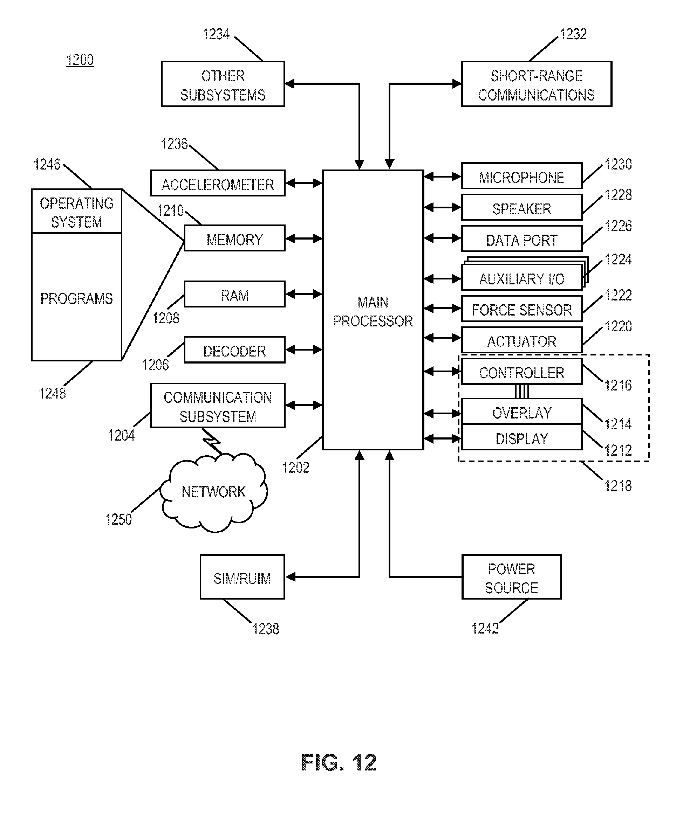

Fig. 12 shows a block diagram of an example of a handheld electronic device 1200 according to some embodiments. The handheld electronic device 1200 includes multiple components, such as a processor 1202 that controls the overall operation of the handheld electronic device 100. Communication functions, including data and voice communications, are performed through a communication subsystem 1204. Data received by the handheld electronic device 1200 is decompressed and decrypted by a decoder 1206. The communication subsystem 1204 receives messages from and sends messages to a wireless network 1250. In various embodiments, the wireless network 1250 is one of various types of wireless network, including, but not limited to, data wireless networks, voice wireless networks, and networks that support both voice and data communications. A power source 1242, such as one or more rechargeable batteries or a port to an external power supply, powers the handheld electronic device 1200.

The processor 1202 interacts with other components, such as Random Access Memory (RAM) 1208, memory 1210, a display 1212 with a touch-sensitive overlay 1214 operably connected to an electronic controller 1216 that together comprise a touch-sensitive display 1218, one or more actuators 1220, one or more force sensors 1222, an auxiliary input/output (I/O) subsystem 1224, a data port 1226, a speaker 1228, a microphone 1230, short-range communications 1232, and other device subsystems 1234. In some embodiments, user-interaction with a graphical user interface is performed through the touch-sensitive overlay 1214. The processor 1202 interacts with the touch-sensitive overlay 1214 via the electronic controller 1216. In various embodiments, various information, such as text, characters, symbols, images, icons, and other items that are displayed or rendered on a handheld electronic device , is displayed on the touch-sensitive display 1218 via the processor 1202. In some embodiments, processor 1202 interacts with an accelerometer 1236 that is utilized to detect direction of gravitational forces or gravity-induced reaction forces. In some embodiments, processor 1202 also performs different steps of methods 200, 300, or 800.

To identify a subscriber for network access, in some embodiments the handheld electronic device 1200 uses a Subscriber Identity Module or a Removable User Identity Module (SIM/RUIM) card 1238 for communication with a network, such as the wireless network 150. Alternatively, in some embodiments, user identification information is programmed into memory 1210.

The handheld electronic device 1200 includes an operating system 1246 and software programs or components 1248 that are executed by the processor 1202 and are typically stored in a persistent, updatable store such as the memory 1210. In some embodiments, additional applications or programs are loaded onto the handheld electronic device 1200 through the wireless network 1250, the auxiliary I/O subsystem 1224, the data port 1226, the short-range communications subsystem 1232, or any other suitable subsystem 1234.

A received signal such as a text message, an e-mail message, or web page download is processed by the communication subsystem 1204 and input to the processor 1202. The processor 1202 processes the received signal for output to the display 1212 and/or to the auxiliary I/O subsystem 1224. In some embodiments, a subscriber generates data items, for example e-mail messages, which is transmitted over the wireless network 1250 through the communication subsystem 1204. For voice communications, the overall operation of the handheld electronic device 1200 is similar. The speaker 1228 outputs audible information converted from electrical signals, and the microphone 1230 converts audible information into electrical signals for processing.

In various embodiments, the touch-sensitive display 1218 is one of various types of suitable touch-sensitive display, such as a capacitive, resistive, infrared, surface acoustic wave (SAW) touch-sensitive display, strain gauge, optical imaging, dispersive signal technology, acoustic pulse recognition, and so forth, as known in the art. A capacitive touch-sensitive display includes a capacitive touch-sensitive overlay 1214. In some embodiments, the overlay 1214 is an assembly of multiple layers in a stack including, for example, a substrate, a ground shield layer, a barrier layer, one or more capacitive touch sensor layers separated by a substrate or other barrier, and a cover. In various embodiments, the capacitive touch sensor layers include one of various suitable materials, such as patterned indium tin oxide (ITO).

In various embodiments, one or more touches, also known as touch contacts or touch events, are detected by the touch-sensitive display 1218. The processor 1202 then determines attributes of the touch, including a location of a touch or the direction a sweeping touch. In some embodiments, touch location data include an area of contact or a single point of contact, such as a point at or near a center of the area of contact. In some embodiments, the location of a detected touch includes x and y components, e.g., horizontal and vertical components, respectively, with respect to one's view of the touch-sensitive display 1218. In some embodiments, the x location component is determined by a signal generated from one touch sensor, and the y location component is be determined by a signal generated from another touch sensor. A signal is provided to the controller 1216 in response to detection of a touch. In some embodiments, a touch is detected from any suitable object, such as a finger, thumb, appendage, or other items, for example, a stylus, pen, or other pointer, depending on the nature of the touch-sensitive display 1218. In some embodiments, multiple simultaneous touches are detected.

In some embodiments, the actuator(s) 1220 is depressed by applying sufficient force to the touch-sensitive display 1218 to overcome the actuation force of the actuator 1220. In some embodiments, the actuator 1220 is actuated by pressing anywhere on the touch-sensitive display 1218. In some embodiments, the actuator 1220 provides input to the processor 1202 when actuated. In some embodiments, actuation of the actuator 1220 results in provision of tactile feedback.

In some embodiments, a mechanical dome switch actuator is utilized. In this example, tactile feedback is provided when the dome collapses due to imparted force and when the dome returns to the rest position after release of the switch.

Alternatively, in some embodiments the actuator 1220 comprises one or more piezoelectric (piezo) devices that provide tactile feedback for the touch-sensitive display 1218. Contraction of the piezo actuator(s) applies a spring-like force, for example, opposing a force externally applied to the touch-sensitive display 1218. Each piezo actuator includes a piezoelectric device, such as a piezoelectric (PZT) ceramic disk adhered to a metal substrate. The metal substrate bends when the PZT disk contracts due to build up of charge at the PZT disk or in response to a force, such as an external force applied to the touch-sensitive display 1218. In some embodiments, the charge is adjusted by varying the applied voltage or current, thereby controlling the force applied by the piezo disks. In some embodiments, the charge on the piezo actuator is removed by a controlled discharge current that causes the PZT disk to expand, releasing the force thereby decreasing the force applied by the piezo disks. In some embodiments, the charge is advantageously removed over a relatively short period of time to provide tactile feedback to the user. In some embodiments, absent an external force and absent a charge on the piezo disk, the piezo disk is slightly bent due to a mechanical preload.

The present disclosure may be embodied in other specific forms without departing from its spirit or essential characteristics. The described embodiments are to be considered in all respects only as illustrative and not restrictive. The scope of the disclosure is, therefore, indicated by the appended claims rather than by the foregoing description. All changes that come within the meaning and range of equivalency of the claims are to be embraced within their scope.

## Claims

1. A handheld electronic device (100) for generation of text in a language, the handheld electronic device comprising:
a memory (1210) for storing a plurality of linguistic objects of the language;
a set of input members (104) consisting of no more than two input members (104R, 104L) that, when actuated, initiate input of characters of the language, wherein every alphabet character in the language is assigned to one actuation of one of the input members; and
a processor (1202) for detecting a set of actuations of at least one of the input members and for determining a set of linguistic objects that correspond to the set of actuations,
wherein each determined linguistic object includes a set of alphabet characters assigned to the set of actuations.

2. The handheld electronic device of claim 1, wherein the determined set of linguistic objects is a plurality of determined linguistic objects (112), the handheld electronic device further comprising a selection member (176L, 185) for receiving a selection of one linguistic object of the plurality of determined linguistic objects.

3. The handheld electronic device of claim 2 further comprising a display device (102),
wherein the selection member includes a touch-sensitive section of the display device on which the plurality of determined linguistic objects are displayed or one input member of the set of input members.

4. The handheld electronic device of claims 1-3, wherein the set of input members includes a first input member (104L) and a second input member (104R), and wherein a first plurality of alphabet characters in the language are assigned to one actuation of the first input member and the remaining of all alphabet characters in the language are assigned to one actuation of the second input member.

5. The handheld electronic device of claim 4, wherein the first input member is assigned for actuation by a first thumb of a user and the second input member is assigned for actuation by a second thumb of the user.

6. The handheld electronic device of claims 1-5, wherein the set of input members is a plurality of input members, the handheld electronic device further comprising a display device for displaying a visual guide (106) indicating each subset of the alphabet characters assigned to an actuation of each of the plurality of input members.

7. The handheld electronic device of claims 1-6, wherein a first set of alphabet characters in the language is assigned to a first-type actuation of one input member of the set of input members and a second set of alphabet characters in the language is assigned to a second-type actuation of the one input member, the second-type actuation being different from the first-type actuation.

8. A method (200, 300, 800) performed by a handheld electronic device for generation of text in a language, the handheld electronic device comprising a memory storing a plurality of linguistic objects of the language, and further comprising a set of input members including no more than two input members, the method comprising:
assigning (200) every alphabet character in the language to one actuation of one of the input members;
detecting (302) a set of actuations of the set of input members; and
determining (304) a set of linguistic objects that correspond to the set of actuations,
wherein each determined linguistic object includes a set of alphabet characters assigned to the set of actuations.

9. The method of claim 8, wherein the determining a set of linguistic objects includes determining a context (826) in which the text is entered and finding linguistic objects which are consistent with the context.

10. The method of claim 9, wherein the context corresponds to a previously entered text, an operator who enters the text, a recipient of the generated text, a conversational message exchange, or a message in response to which the text is entered.

11. The method of claims 8-10, further comprising:
detecting a change in orientation of the handheld electronic device (1100);
providing an alternative mechanism (1105) for text entry other than actuation of the set of input members;
receiving inputs for text entry entered via the alternative mechanism; and
determining a set of linguistic objects corresponding to inputs entered via the alternative mechanism.

12. The method of claim 8-11, further comprising receiving a length input (514) corresponding to a number of alphabet characters in a text to be entered, wherein determining a set of linguistic objects comprises finding linguistic objects which include a number of alphabet characters that is approximately equal to the number of alphabet characters in the text to be entered.

13. The method of claim 8-12, further comprising receiving a start character input (716) that indicates a set of start alphabet characters, wherein determining a set of linguistic objects comprises finding linguistic objects each of which starts with one of the set of start alphabet characters.

14. The method of claim 8-13, further comprising receiving a frequency input that indicates a desired usage frequency of a text to be entered, wherein determining a set of linguistic objects comprises finding linguistic objects each of which has a usage frequency that is approximately equal to the desired usage frequency.

## Amended claims

### Amended claims in accordance with Rule 137(2) EPC.

**1.** A handheld electronic device (700) for generation of text in a language, the handheld electronic device comprising:
a memory (1210) for storing a plurality of linguistic objects of the language;
a set of input members (704) consisting of no more than two input members (704L) that, when actuated, initiate input of characters of the language, wherein every alphabet character in the language is assigned to one actuation of one of the input members; and
a processor (1202) for detecting a set of actuations of at least one of the input members and for determining a set of linguistic objects that correspond to the set of actuations, wherein each determined linguistic object includes a set of alphabet characters assigned to the set of actuations,
wherein a first set of alphabet characters in the language is assigned to a first-type actuation of one input member of the set of input members (704L), and a second set of alphabet characters in the language is assigned to a second-type actuation of the one input member (704L), the second-type actuation being different from the first-type actuation.

**2.** The handheld electronic device of claim 1, wherein the determined set of linguistic objects is a plurality of determined linguistic objects (112), the handheld electronic device further comprising a selection member (176L, 185) for receiving a selection of one linguistic object of the plurality of determined linguistic objects.

**3.** The handheld electronic device of claim 2 further comprising a display device (702), wherein the selection member includes a touch-sensitive section of the display device on which the plurality of determined linguistic objects are displayed or one Input member of the set of input members.

**4.** The handheld electronic device of claim 1-3, wherein a first input member of the set of input members (704L) is assigned for actuation by a first thumb of a user and a second input member of the set of input members (704R) is assigned for actuation by a second thumb of the user.

**5.** The handheld electronic device of claims 1-4, wherein the set of input members is a plurality of input members, the handheld electronic device further comprising a display device for displaying a visual guide (106) indicating each subset of the alphabet characters assigned to an actuation of each of the plurality of input members.

**6.** The handheld electronic device of claim 1-5, wherein the first-type actuation is a short press of the one input member and the second-type actuation is a long press of the input member.

**7.** The handheld electronic device of claim 1-6, wherein the set of actuations indicates a length input (514) corresponding to a number of alphabet characters in a text to be entered and wherein each determined linguistic object includes a number of alphabet characters that is approximately equal to the number of alphabet characters in the text to be entered.

**8.** A method (200, 300, 800) performed by a handheld electronic device (500) for generation of text in a language, the handheld electronic device comprising a memory (1210) storing a plurality of linguistic objects of the language, and further comprising a set of input members (504) including no more than two Input members, the method comprising:
detecting (302) a set of actuations of the set of input members, the set of actuations indicating a length input (514) corresponding to a number of alphabet characters in a text to be entered; and
determining (304) a set of linguistic objects that correspond to the set of actuations,
wherein each determined linguistic object includes a number of alphabet characters that is approximately equal to the length input.

**9.** The method of claim 8, wherein the determining a set of linguistic objects includes determining a context (826) in which the text Is entered and finding linguistic objects which are consistent with the context.

**10.** The method of claim 9, wherein the context corresponds to a previously entered text, an operator who enters the text, a recipient of the generated text, a conversational message exchange, or a message in response to which the text is entered.

**11.** The method of claims 8-10, further comprising:
detecting a change in orientation of the handheld electronic device (1100);
providing an alternative mechanism (1105) for text entry other than actuation of the set of input members, wherein the alternative mechanism conforms with the change in orientation;
receiving inputs for text entry entered via the alternative mechanism; and
determining a set of linguistic objects correspondingto inputs entered via the alternative mechanism.

**12.** The method of claim 8-11, further comprising receiving a start character input (716) that indicates a set of start alphabet characters, wherein determining a set of linguistic objects comprises finding linguistic objects each of which starts with one of the set of start alphabet characters.

**13.** The method of claim 6-12, further comprising receiving a frequency input that indicates a desired usage frequency of a text to be entered, wherein determining a set of linguistic objects comprises finding linguistic objects each of which has a usage frequency that is approximately equal to the desired usage frequency.

**14.** The method of claim 8-13, wherein a first set of alphabet characters in the language is assigned to a first-type actuation of one input member of the set of input members (704L) and a second set of alphabet characters in the language is assigned to a second-type actuation of the one input member (704L), the second-type actuation being different from the first-type actuation.

**15.** The method of claim 14, wherein the first-type actuation is a short press of the one input member and the second-type actuation is a long press of the input member.
